(19) Europäisches Patentamt
European Patent Office
Office européen des brevets

(11) Veröffentlichungsnummer: **0 303 968 B1**

(12) **EUROPÄISCHE PATENTSCHRIFT**

(45) Veröffentlichungstag der Patentschrift: **16.10.91**

(51) Int. Cl.5: **F16D 13/04**, F16D 27/02, B60K 23/04

(21) Anmeldenummer: **88113043.9**

(22) Anmeldetag: **11.08.88**

(54) Kupplung mit zwei Druckplatten und einem Anschlag sowie Differential mit zwei Kupplungen.

(30) Priorität: **18.08.87 DE 3727510**

(43) Veröffentlichungstag der Anmeldung:
**22.02.89 Patentblatt 89/08**

(45) Bekanntmachung des Hinweises auf die Patenterteilung:
**16.10.91 Patentblatt 91/42**

(84) Benannte Vertragsstaaten:
**AT BE CH DE ES FR GB IT LI**

(56) Entgegenhaltungen:
**DE-A- 2 822 373**
**DE-A- 3 308 398**
**DE-C- 3 543 871**
**US-A- 4 694 943**

(73) Patentinhaber: **DEERE & COMPANY**
**1 John Deere Road**
**Moline, Illinois 61265(US)**

(72) Erfinder: **Weiss, Heinz**
**Volkerstrasse 24**
**W-6140 Bensheim(DE)**
Erfinder: **Gelb, Herbert**
**Birkenallee 7**
**W-6832 Hockenheim(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

## Beschreibung

Die Erfindung betrifft eine Kupplung mit zwei Druckplatten und einem Anschlag, gemäß dem Oberbegriff von Patentanspruch 1, sowie ein Differential mit mindestens zwei derartigen Kupplungen.

Aus der DE-A-3 308 398 ist ein Differential mit zwei Kupplungen bekannt geworden, die drehmomentabhängig einen Antrieb zu jeweils einem anzutreibenden Rad weiterleiten oder den Antrieb zu einem überholenden Rad unterbrechen. Jede Kupplung enthält zwei Druckplatten, die tangential zueinander relativ beweglich sind und von denen eine infolge der Tangentialbewegung axial verschoben wird, um das Eingreifen der Kupplung für den Antrieb zu einem Rad zu bewirken. Die beiden axial beweglichen Druckplatten sind über einen Stopring miteinander verbunden, so daß sich zwar bei Vorwärts- wie bei Rückwärtsfahrt bei Drehzahlungleichheit an beiden Rädern die Kupplung des überholenden Rades öffnet, aber nicht als Bremse wieder einrücken kann.

Diese Kupplung ist insofern nachteilig, als es zu ihrer Funktion unbedingt erforderlich ist, daß der Stopring mit beiden axial beweglichen Druckringen in Eingriff steht. Es ist demnach stets ein zwischen beiden Rädern angeordnetes Differential mit entsprechenden Baumaßen erforderlich. Außerdem erlaubt diese Art des Stoprings nur wenige Betriebszustände.

Die der Erfindung zugrunde liegende Aufgabe wird darin gesehen, die Kupplung derart auszubilden, daß sie auch ohne Einbau in ein Zwischenraddifferential im Einbau direkt an einem Radabtrieb eines anzutreibenden Rades mindestens die gleiche Funktion wie die bekannte Kupplung erbringt und soweit möglich noch weitere Betriebszustände erlaubt.

Diese Aufgabe ist durch die erfindungsgemäße Lehre nach Patentanspruch 1 gelöst worden, und in den weiteren Patentansprüchen sind vorteilhafte weitere Ausbildungen bzw. eine günstige Verwendung enthalten.

Auf diese Weise ist für jeden anzutreibenden Teil und bei einem Differential zwischen zwei Rädern jedem Rad eine Kupplung mit einem Anschlag zugeordnet, der die gleiche Funktion erfüllt wie der bekannte Stopring, der jedoch selbständig gesteuert wird und bei der Verwendung in einem Radabtrieb eines Kraftfahrzeuges in Abhängigkeit von dem Vorlauf eines überholenden äußeren Rades bei Kurvenfahrt und gegebenenfalls dem Lenkwinkel und der Fahrtrichtung eines Fahrzeuges wirkend oder wirkungslos gemacht wird. Wenn auch die beiden Anschläge baulich voneinander getrennt sind, so sind sie funktionell jedoch über den Boden und einen Steuerkreis miteinander verbunden, der die Parameter auswertet und die Anschläge steuert.

In der Zeichnung ist ein nachfolgend näher beschriebenes Ausführungsbeispiel der Erfindung dargestellt. Es zeigt:

Figur 1  eine erfindungsgemäße Kupplung im eingebauten Zustand und

Figur 2  die Kupplung nach Figur 1 als Abwicklung in schematischer Darstellung.

Die folgende Beschreibung baut darauf auf, daß die erfindungsgemäße Kupplung im Vorderradantrieb eines Ackerschleppers verwendet wird, und zwar so, wie es in der DE-PS 3 543 871 beschrieben ist, deren Offenbarung ausdrücklich in diese Beschreibung mit einbezogen wird.

Eine derartige Kupplung kann aber auch für andere Zwecke verwendet werden. So kann der Antrieb von z. B. Antriebsrollen von Förderbahnen, von Gebläsen oder der Abtrieb von einem Motor mittels einer derartigen Kupplung gesteuert werden. Es müssen auch keineswegs wie bei dem bekannten Anwendungsfall zwei symmetrisch zueinander angeordnete Kupplungen vorgesehen sein, sondern es können auch drei oder mehrere Kupplungen verwendet werden.

Eine Kupplung 10 setzt sich im wesentlichen aus einer ersten Druckplatte 12, einer zweiten Druckplatte 14, aus Lamellen 16 und einem Anschlag 18 zusammen.

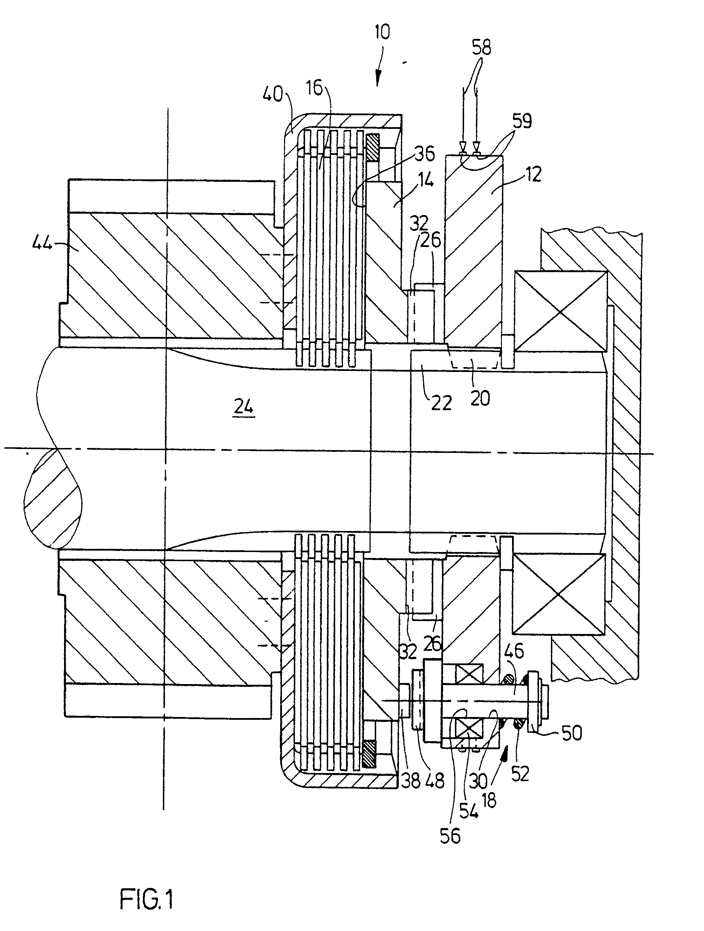

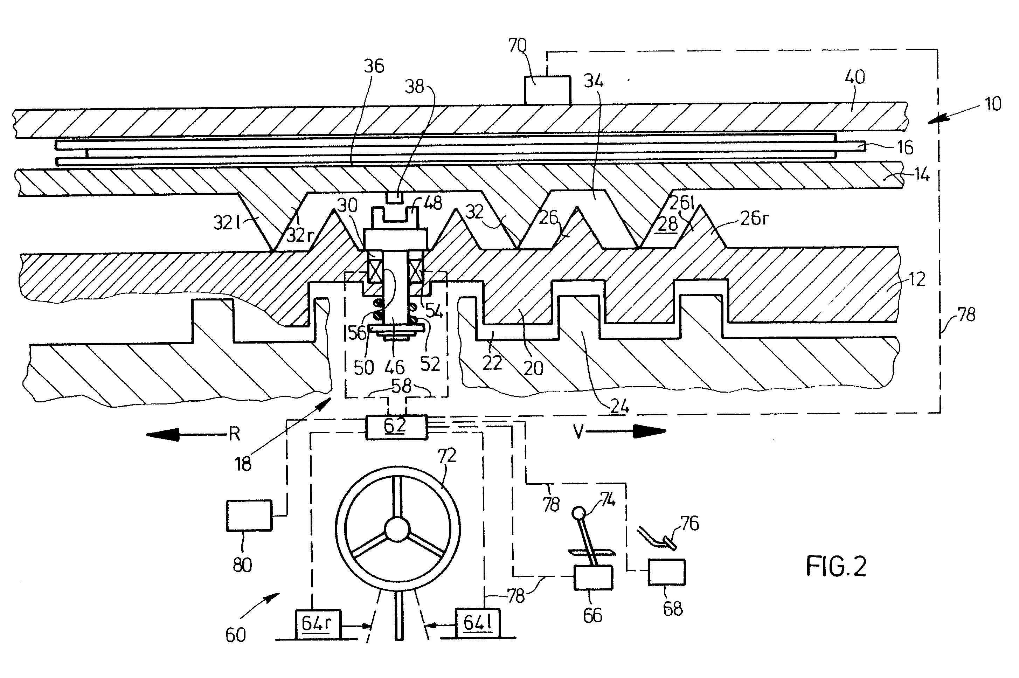

Die erste Druckplatte 12 ist an einem inneren Lochumfang mit Nocken 20 versehen, die in entsprechende Lücken 22 an einem Rotationsteil 24, z. B. einer Welle, eingreifen. Ist die erste Druckplatte 12 an einer äußeren Mantelfläche mit Nocken 20 versehen, dann greift sie in eine Glocke ein, was allerdings nicht dargestellt ist. Die Nocken 20 und die Lücken 22 können sowohl wie in Fig. 1 dargestellt radial ineinander eingreifend als auch axial ineinander eingreifend ausgebildet sein. An der der zweiten Druckplatte 14 zugelegenen Stirnseite sind konische oder gewölbte Zähne 26 angebracht, die jeweils eine mit Blick auf Figur 2 rechte und linke Flanke 26r und 26l besitzen. Zwischen den Zähnen 26 sind Zahnlücken 28 vorgesehen, deren tangentiale Entfernung größer ist als die tangentiale Erstreckung eines Zahns 26. In die erste Druckplatte 12 ist eine Bohrung 30 für den Anschlag 18 eingearbeitet.

Die zweite Druckplatte 14 weist ebenfalls Zähne 32 und Zahnlücken 34 auf, die spiegelbildlich zu denen der ersten Druckplatte 12 ausgebildet und mit einem tangentialen Versatz zu diesen angeordnet sind. Auf der den Zähnen 32 gegenüberliegenden Seite der zweiten Druckplatte 14 ist eine plane Druckfläche 36 angearbeitet, an die die erste Lamelle 16 zur Anlage kommt. Zwischen der zweiten Druckplatte 14 und dem Rotationsteil 24 besteht kein Formschluß. In einer der Bohrung 30 gegenüberliegenden Zahnlücke 34 ist eine Raste 38 vorgesehen, die z. B. in die zweite Druckplatte 14 eingeschraubt, eingesetzt oder an diese angeformt sein kann.

Die Lamellen 16 sind zu einem Lamellenpaket zusammengefaßt, und jeweils eine Lamelle 16 ist innenverzahnt, und die daneben angeordnete Lamelle 16 ist außenverzahnt, wie dies bekannt ist. Die letzte der Lamellen 16 liegt an einer Stützplatte 40 an, die mit einem Abtriebsteil 44 verschraubt ist. Die außenverzahnten Lamellen 16 stehen ebenfalls mit dieser Stützplatte 40 in Eingriff. Die Stützplatte 40 liegt axial fest, so daß alle Lamellen 16 gegen die Stützplatte 40 aufeinander gepreßt werden können, wie dies weiter unten noch beschrieben wird.

Der Anschlag 18 ist mit einem Stößel 46 versehen, der an dem der Raste 38 zugelegenen Endbereich eine Gabel 48 und an dem anderen Endbereich einen Kopf 50 aufweist, wobei der Kopf 50 z. B. aus einer Unterlegscheibe und einem Sicherungsring gebildet sein kann. Der Stößel 46 wird auf einem Teil seiner Länge von einer Feder 52 und auf einem anderen Teil seiner Länge von einem elektrisch steuerbaren Magneten 54 umgeben, dessen Ankerbohrung 56 einen Durchmesser besitzt, der kleiner ist als der Außendurchmesser der Gabel 48.

Die Feder 52 ist zwischen dem Kopf 50 und einer Stirnseite der ersten Druckplatte 12 eingesetzt und vorgespannt und ist bestrebt, den Stößel 46 von der Raste 38 wegzuziehen, so daß die Gabel 48 an dem Magneten 54 oder an der ersten Druckplatte 12 in einer der Zahnlücken 28 zur Anlage kommt.

Der Magnet 54 ist in die Bohrung 30 eingeschraubt, eingeklebt oder sonstwie in dieser gehalten und wird über Steuerleitungen 58 gesteuert, die Steuerimpulse über Schleifringkontakte 59 an den Magneten 54 liefern. Die Steuerung funktioniert derart, daß an dem Magneten 54 eine Spannung angelegt wird oder nicht.

Derartige Magneten 54 werden herkömmlich als Solenoide bezeichnet, und anstatt dieses Magneten 54 kann auch ein Magnetventil vorgesehen werden, das die Zu- oder Abfuhr von Druckluft oder Drucköl zu dem Stößel 46 steuert und somit dessen Axialbewegung bewirkt.

Da der Anschlag 18 in die erste Druckplatte 12 eingesetzt ist, die sich im Betrieb dreht, kann an einer diametral zu dem Anschlag 18 gelegenen Stelle im Bedarfsfalle ein Ausgleichsgewicht angebracht werden, um evtl. Unwuchten zu vermeiden.

Der Anschlag 18 kann in eine wirkende und in eine wirkungslose Stellung gebracht werden, wozu ein Steuerkreis 60 verwendet wird.

Der Steuerkreis 60 ist vorzugsweise auf elektronischer Basis aufgebaut; es ist jedoch auch möglich, ihn auf hydraulischer, pneumatischer Basis oder auf einer aus diesen gebildeten Kombination aufzubauen.

In dem Steuerkreis 60 sind eine Steuereinheit 62, ein Lenkwinkelsensor 64r für Rechtslenkung und 64l für Linkslenkung, ein Fahrtrichtungssensor 66 zur Erfassung der Fahrtrichtung, ein Bremssensor 68, ein Drucksensor 70 und ein Hauptschalter 80 enthalten.

Die Steuereinheit 62 ist mit einer inneren Schaltlogik ausgerüstet, die durch entsprechende logische Verknüpfungen die weiter unten beschriebene Funktion erbringt. Die von der Steuereinheit 62 ausgehenden Steuerimpulse werden über die Steuerleitungen 58 an den Magneten 54 des Anschlags 18 weitergegeben, um diesen entsprechend zu steuern.

Die Lenkwinkelsensoren 64r und 64l sind an einem Lenkteil 72 angebracht, das sowohl ein Lenkrad, eine Lenk- oder Spurstange, ein Lenkarm oder dergleichen sein kann; in der Zeichnung ist zur einfachen Darstellung lediglich ein Lenkrad angedeutet. Selbstverständlich ist es von der Bauart der Lenkwinkelsensoren 64r, 64l abhängig, ob ein Lenkwinkelsensor, der zwei Richtungen erfassen kann, oder zwei Lenkwinkelsensoren vorgesehen sind, von denen jeder nur eine Richtung erfassen kann.

Der Fahrtrichtungssensor 66 ist vorzugsweise an einem Schalthebel 74 für Vorwärts- und/oder Rückwärtsfahrt angebracht; er kann sich jedoch auch irgendwo im Getriebe oder an den Rädern befinden.

Der Bremssensor 68 befindet sich entweder an Bremspedalen 76 oder an Bremsleitungen oder dergleichen und stellt fest, ob ein Bremsvorgang gerade stattfindet oder nicht.

Der Drucksensor 70 ist im Bereich der Kupplung 10 angeordnet und stellt fest, ob die erste oder zweite Druckplatte 12 oder 14 einer Axiallast unterliegt, die anzeigt, daß das zugehörige Rad bzw. der Abtriebsteil 44 angetrieben werden.

Vorzugsweise sind die Lenkwinkelsensoren 64r, 64l, der Fahrtrichtungssensor 66, der Bremssensor 68 und der Drucksensor 70 als einfache Kontaktschalter ausgebildet, die entweder einen Stromdurchgang ermöglichen oder sperren.

Die Verbindung zwischen den Lenkwinkelsensoren 64r, 64l, dem Fahrtrichtungssensor 66 und dem Bremssensor 68 mit der Steuereinheit 62 erfolgt über Leitungen 78.

Mit dem Hauptschalter 80 kann jeglicher Antrieb zu den antreibbaren Rädern ausgeschaltet werden. Der Hauptschalter 80 ist vorzugsweise auf einer nicht gezeichneten Fahrerplattform angebracht und kann willkürlich bedient werden.

Außerdem können mehrere Bremssensoren 68 vorgesehen werden, um zwischen einem Bremsvorgang bei Geradeausfahrt und einem Lenkbremsvorgang unterscheiden zu können.

Die Funktion der Kupplung 10 ergibt sich aus dem vorstehend Beschriebenen wie folgt.

Insgesamt sind vier Betriebszustände vorgesehen, und zwar:

A Antrieb für Vorwärtsfahrt ist möglich - beim Kurvenfahren kann das überholende Rad allerdings nicht abbremsen, sondern frei abrollen;

B Antrieb für Rückwärtsfahrt ist möglich - beim Kurvenfahren kann das überholende Rad allerdings nicht abbremsen, sondern frei abrollen;

C Es ist weder ein Antrieb noch ein Bremsen bei Vorwärtsfahrt und Rückwärtsfahrt möglich;

D Es ist ein Bremsen bei Geradeausfahrt sowohl bei Rückwärtsfahrtrichtung als auch bei Vorwärtsfahrtrichtung möglich.

Betriebszustand A

Der Rotationsteil 24 wird über eine nicht gezeigte Antriebswelle in Richtung des Pfeils - V - in Figur 2 gedreht und nimmt in dieser Richtung die erste Druckplatte 12 mit. Der Stößel 46 befindet sich infolge der Wirkung der Feder 52 in seiner wirkungslosen Stellung, d. h. sein Kopf 50 liegt an der ersten Druckplatte 12 an, und die Gabel 48 kann an der Raste 38 vorbei bewegt werden. Die erste Druckplatte 12 bewegt sich tangential so lange alleine, bis die rechten Flanken 26r ihrer Zähne 26 an den linken Flanken 32l der Zähne 32 der zweiten Druckplatte 14 zur Anlage kommen. Aufgrund der Neigung der Flanken 26r und 32l wird die Tangentialkraft in eine Axial- und in eine Radialkomponente zerlegt, wobei die Axialkomponente eine Axialbewegung der zweiten Druckplatte 14 zu den Lamellen 16 und der Stützplatte 40 erzeugt, so daß ein Kraft- oder Reibschluß in der Kupplung 10 entsteht, der bewirkt, daß sich der Abtriebsteil 44 in der gleichen Richtung bewegt.

Die durch die Axialbewegung der zweiten Druckplatte 14 erzeugte Axialkraft wird von dem Drucksensor 70 festgestellt und über die Leitung 78 an die Steuereinheit 62 weitergeleitet, um dort einen Steuerimpuls zu erzeugen, der den Stößel 46 auf die zweite Druckplatte 14 zubewegt, so daß seine Gabel 48 in die Bewegungsbahn der Raste 38 gelangt.

Sobald nun der Ackerschlepper eine Kurve durchfährt, wird oberhalb eines bestimmten Lenkwinkels der Abtriebsteil 44 und die mit ihm verbundene zweite Druckplatte 14 in der gleichen Richtung - V - schneller drehen als der Rotationsteil 24 und die erste Druckplatte 12, ausgehend davon, daß die in der Zeichnung gezeigte Kupplung 10 die dem kurvenäußeren Rad zugeordnete Kupplung 10 ist. Dies bewirkt, daß sich die Flanken 26r und 32l voneinander abheben und daß sich, je größer dieser Drehzahlunterschied wird, nunmehr die Flanken 32r auf die Flanken 26l zubewegen, in dem Bestreben, einen Kraftschluß zu erzeugen, der eine Abbremsung des Abtriebsteils 44 bewirkt. Bevor die Flanken 26r und 32l jedoch aneinander zur Anlage kommen, schlägt die Raste 38 an der Gabel 48 des Stößels 46 an und verhindert eine weitere Relativbewegung zwischen beiden Druckplatten 12 und 14. Demnach kann das überholende Rad frei abrollen.

Betriebszustand B

Während des an dem Ackerschlepper vorgenommenen Fahrtrichtungswechsels wird der Fahrtrichtungssensor 66 betätigt, woraufhin von der Steuereinheit 62 ein Steuerimpuls an den Magneten 54 abgegeben wird, der bewirkt, daß sich der Stößel 46 wieder von der zweiten Druckplatte 14 wegbewegt, so daß er aus der Bewegungsbahn der Raste 38 gelangt.

Daraufhin läuft der gleiche Vorgang wie bei der Vorwärtsfahrt ab; allerdings erfolgt der Antrieb nunmehr in der Richtung des Pfeils - R -, so daß sich auch die Seitenbezeichnungen der Flanken 26l, 26r, 32l, 32r entsprechend umkehren.

Betriebszustand C

Ausgehend von Betriebszustand - A - oder - B - wird der Betriebszustand - C - dadurch erreicht, daß der Hauptschalter 80 in eine entsprechende Stellung gebracht wird, in der die Steuereinheit 62 dem Magneten 54 einen Steuerimpuls zusendet, der bewirkt, daß der Stößel 46 mit seiner Gabel 48 die Raste 38 übergreift und somit die erste und die zweite Druckplatte 12 und 14 miteinander verbindet. Um zu gewährleisten, daß die Gabel 48 die Raste 38 auch übergreift und nicht neben sie gelangt, kann sich die Gabel 48 auch v-förmig öffnen und die Raste 38 angespitzt sein, so daß auch bei einem geringfügigen tangentialen Versatz beider Druckplatten 12,14 die Raste 38 in die Gabel 48 hineinschlüpft.

Nachdem beide Druckplatten 12,14 miteinander verbunden sind, können die Zähne 26 und 32 nicht aneinander zur Anlage kommen und somit weder einen Antrieb noch eine Bremsung hervorrufen.

Betriebszustand D

Der Betriebszustand - D - wird automatisch und unabhängig davon, welcher Betriebszustand - A -, - B - oder - C - gerade herrscht, aktiviert, wenn die Lenkwinkelsensoren 64 Geradeausfahrt oder Geradeausfahrt innerhalb bestimmter Grenzen feststellen und die Bremsen betätigt werden. Daraufhin geht von der Steuereinheit 62 ein Steuerimpuls aus, der den Magneten 54 stromlos macht, so daß der Stößel 46 von der Feder 52 aus der Bewegungsbahn der Raste 38 gezogen wird. Wenn nun der Ackerschlepper abgebremst wird und an den stets angetriebenen Rädern ein Schlupf auftritt, so daß an den Kupplungen 10 beider Räder ein Vorgang abläuft, wie er auch beim Überholen eines kurvenäußeren Rades bei Betriebszustand - A - beschrieben worden ist, dann kann der Stößel 46 des Anschlags 18 nicht mehr verhindern, daß die Zähne 26 und 32 aneinander zur Anlage kommen. Deshalb greifen die Kupplungen 10, und es entsteht eine Verspannung in dem gesamten Antriebsstrang, die sich bis zu dem Getriebe und den Bremsen der stets angetriebenen Räder fortsetzt und bewirkt, daß nun sowohl die stets angetriebenen wie auch die antreibbaren Räder Bremskraft aufbringen.

Der Betriebszustand - D - ist auch stets dann gegeben, wenn der Ackerschlepper ausgeschaltet ist, weil dann an dem Magneten 54 keine Spannung anliegt.

Es kann wahlweise auch ein weiterer nicht gezeigter Schalter vorgesehen werden, mit dessen Hilfe der Betriebszustand - D - auch willkürlich erreicht werden kann, z. B. um beim Fahren auf glatter Oberfläche auch mit den antreibbaren Rädern abbremsen zu können.

Zur Steuerung des Anschlags 18 können auch andere und weitere Sensoren zum Erfassen bestimmter Parameter herangezogen werden. Außerdem können auch weitere weniger oder andere Betriebszustände eingerichtet werden, wozu dann allerdings die Schaltlogik in der Steuereinheit 62 geändert werden muß.

**Patentansprüche**

1.  Kupplung (10) mit zwei Druckplatten (12, 14) und einem Anschlag (18), wobei
    a) die Druckplatten (12, 14) **relativ** zueinander **drehbar** sind,
    b) die Druckplatten (12, 14) **mittels abweisender Zähne (26, 32)** ineinander eingreifen,
    c) der Anschlag (18) mit einer der Druckplatten (12) verbunden ist und
    d) der Anschlag (18) an der anderen Druckplatte (14) zur Anlage bringbar ist, um die Relativbewegung zwischen beiden Druckplatten (12, 14) nach einem vorbestimmten **Winkel** zu beenden,
    dadurch gekennzeichnet, daß der Anschlag (18) in Abhängigkeit von ausgewählten Parametern in eine Stellung bringbar ist, in der er wirkungslos ist.

2.  Kupplung nach Anspruch 1, dadurch gekennzeichnet, daß auf der anderen Druckplatte (14) eine Raste (38) vorgesehen ist und daß der Anschlag (18) auf jeder seite bzw. in jeder Bewegungsrichtung an der Raste (38) zur Anlage bringbar ist.

3.  Kupplung nach Anspruch 2, dadurch gekennzeichnet, daß der Anschlag (18) mit der Raste (38) form- oder reibschlüssig verbindbar ist.

4.  Kupplung nach Anspruch 1, dadurch gekennzeichnet, daß der Anschlag (18) mittels eines steuerbaren Magneten (54) oder mittels Druckventilen in verschiedene Stellungen bringbar ist.

5.  Kupplung nach Anspruch 1, dadurch gekennzeichnet, daß der Anschlag (18) mittels einer Feder (52) in seine wirkungslose Stellung gebracht wird.

6.  Kupplung nach Anspruch 1, dadurch gekennzeichnet, daß die Druckplatten (12, 14) an den einander zugewandten seiten mit axial vorspringenden, konisch oder gewölbt ausgebildeten Zähnen (26, 32) versehen sind, die abwechselnd ineinander eingreifen.

7.  Kupplung nach einem oder mehreren der vorherigen Ansprüche, dadurch gekennzeichnet, daß der Anschlag (18) einen Stößel (46), eine Feder (52) und einen Magneten (54) enthält, wobei der Stößel (46) in einer Richtung von der Feder (52) und in einer anderen Richtung von dem Magneten (54) bewegbar ist.

8.  Kupplung nach einem oder mehreren der vorherigen Ansprüche, dadurch gekennzeichnet, daß die Steuerung des Magneten (54) über einen Steuerkreis (60) mit einer Steuereinheit (62) erfolgt.

9.  Differential eines lenkbaren Kraftfahrzeuges, insbesondere eines Ackerschleppers, mit mindestens zwei Kupplungen nach einem oder mehreren der vorherigen Ansprüche, dadurch gekennzeichnet, daß als Parameter der Vorlauf eines überholenden äußeren Rades bei Kurvenfahrt und gegebenenfalls der Lenkwinkel, die Fahrtrichtung, eine Bremsbetätigung und/oder ein tatsächlicher Antriebszustand erfaßt werden.

10. Differential nach Anspruch 9, wobei jedem Rad einer Achse eine Kupplung (10) nach einem oder mehreren der vorherigen Ansprüche zugeordnet ist, dadurch gekennzeichnet, daß die Kupplungen (10) im Abtriebsbereich jedes Rades angeordnet sind.

## Claims

1. Clutch (10) with two pressure plates (12, 14) and a detent (18), wherein
   a) the pressure plates (12, 14) are rotatable relative to one another,
   b) the pressure plates (12, 14) engage in one another by means of projecting teeth (26, 32),
   c) the detent (18) is connected to one of the pressure plates (12),
   d) the detent (18) can be brought into abutment against the other pressure plate (14) in order to terminate the relative movement between the two pressure plates (12, 14) after a predetermined angle,
   characterised in that in dependence upon selected parameters, the detent (18) can be brought into a position in which it is ineffective.

2. Clutch according to Claim 1, characterised in that a locking element (38) is provided on the other pressure plate (14) and the detent (18) can be brought into abutment against the locking element (38) on each side and in each direction of movement.

3. Clutch according to Claim 2, characterised in that the detent (18) can be connected with the locking element (38) in form-locking or frictional contact.

4. Clutch according to Claim 1, characterised in that the detent (18) can be brought into various positions by means of a controllable magnet (54) or by means of pressure valves.

5. Clutch according to Claim 1, characterised in that the detent (18) is brought into its ineffective position by means of a spring (52).

6. Clutch according to Claim 1, characterised in that the pressure plates (12, 14) are provided on their sides facing one another with axially projecting teeth (26, 32) of conical or convex form which mesh in one another alternately.

7. Clutch according to one or more of the preceding Claims, characterised in that the detent (18) comprises a push rod (46), a spring (52) and a magnet (54), the push rod (46) being movable in one direction by the spring (52) and in another direction by the magnet (54).

8. Clutch according to one or more of the preceding Claims, characterised in that the control of the magnet (54) takes place through the medium of a control circuit (60) with a control unit (62).

9. Differential for a steerable motor vehicle, in particular an agricultural tractor, having at least two clutches according to one or more of the preceding Claims, characterised in that the lead of an overtaking outer wheel when travelling on a bend and, if need be, the steering angle, the direction of travel, brake actuation and/or an actual driving situation are detected as parameters.

10. Differential according to Claim 9, wherein a clutch (10) according to one or more of the preceding Claims is associated with each wheel, characterised in that the clutches (10) are arranged in the driven zone of each wheel.

## Revendications

1. Embrayage (10) comportant deux disques de pression (12,14) et une butée (18),
   a) les disques de pression (12,14) peuvent tourner l'un par rapport à l'autre,
   b) les disques de pression (12,14) engrènent réciproquement au moyen de dents écartées (26,32),
   c) la butée (18) est raccordée à l'un des disques de pression (12), et
   d) la butée (18) peut être appliquée contre l'autre disque de pression (14) pour interrompre le déplacement relatif entre les deux disques de pression (12,14) au bout d'un angle prédéterminé,
   caractérisé en ce que la butée (18) peut être amenée, en fonction de paramètres sélectionnés, dans une position dans laquelle elle est inactive.

2. Embrayage suivant la revendication 1, caractérisé en ce qu'un taquet d'enclenchement (38) est prévu sur l'autre disque de pression (14) et que la butée (18) peut être appliquée de chaque côté ou dans chaque sens de déplacement sur le taquet d'enclenchement (38).

3. Embrayage selon la revendication 2, caractérisé en ce que la butée (18) peut être raccordée au taquet d'enclenchement (38) selon une liaison par complémentarité de formes ou selon une liaison à friction.

4. Embrayage selon la revendication 1, caractérisé en ce que la butée (18) peut être placée dans différentes positions au moyen d'un aimant commandable (54) ou de soupapes de pression.

5. Embrayage selon la revendication 1, caractérisé en ce que la butée (18) peut être amenée, à l'aide d'un ressort (52), dans une position inactive.

6. Embrayage selon la revendication 1, caractérisé en ce que les disques de pression (12,14) comportent, sur leurs faces tournées l'une vers l'autre, des dents (26, 32), qui font saillie axialement, possèdent une forme conique ou cintrée et engrènent alternativement les unes dans les autres.

7. Embrayage selon une ou plusieurs des revendications précédentes, caractérisé en ce que la butée (18) contient un poussoir (46), un raccord (52) et un aimant (54), le poussoir (46) pouvant être déplacé dans une direction par le ressort (52) et dans l'autre direction par l'aimant (54).

8. Embrayage selon une ou plusieurs des revendications précédentes, caractérisé en ce que la commande de l'aimant (54) est réalisée au moyen d'un circuit de commande (60) avec une unité de commande (62).

9. Différentiel d'un véhicule automobile orientable, notamment d'un tracteur agricole, comportant au moins deux embrayages selon une ou plusieurs des revendications précédentes, caractérisé en ce qu'on détecte comme paramètres la chasse négative d'une roue extérieure survirante dans le cas du franchissement d'une courbe, et éventuellement l'angle de braquage, le sens de déplacement, un actionnement des freins et/ou un état effectif d'entraînement.

10. Différentiel selon la revendication 9, dans lequel à chaque roue d'un essieu est associé un embrayage (10) selon une ou plusieurs des revendications précédentes, caractérisé en ce que les embrayages (10) sont disposés dans la partie entraînée de chaque roue.

FIG.1

8

FIG.2

EP 0 303 968 B1